# EUROPEAN PATENT SPECIFICATION

(11) **EP 2 273 661 B1**
(45) Date of publication and mention of the grant of the patent: **20.11.2019**
(21) Application number: 09731707.7
(22) Date of filing: 16.03.2009
(51) Int. Cl.: H02M 7/12, H02M 7/48, H02P 6/08, H02P 27/08, H02P 21/00, H02M 1/42, H02M 7/219

(54) **CONVERTER CONTROL METHOD**
UMSETZERSTEUERVERFAHREN
PROCÉDÉ DE COMMANDE DE CONVERTISSEUR

(30) Priority: 18.04.2008 JP 2008108897
(43) Date of publication of application: 12.01.2011
(73) Proprietor: Daikin Industries, Ltd., Osaka 530-8323 (JP)
(72) Inventor: KAWASHIMA, Reiji, Kusatsu-shi Shiga 525-8526 (JP)
(74) Representative: Hoffmann Eitle
(86) International application number: PCT/JP2009/055014
(87) International publication number: WO 2009/128312

(56) References cited:
- JP-A- 7 245 957
- JP-A- 2006 006 046
- JP-A- 2006 006 046
- JP-A- 2006 115 609
- US-A1- 2007 121 354
- US-A1- 2007 200 529
- GRZESIAK L M ET AL: "Autonomous power generating system with generic n-level back-to-back converters", POWER ENGINEERING CONFERENCE, 2007. IPEC 2007. INTERNATIONAL, IEEE, PISCATAWAY, NJ, USA, 3 December 2007 (2007-12-03), pages 245-250, XP031264115, ISBN: 978-981-05-9423-7

## Description

### TECHNICAL FIELD

The present invention relates to a converter control method, and particularly to a method for controlling a converter which rectifies a multi-phase current.

### BACKGROUND ART

When a DC voltage is obtained by rectifying a current obtained from an AC power source, a higher power factor is desired. For example, in order to set a power factor at one in the use of a voltage-source PWM converter, it is necessary that an outputted DC voltage is set at a value higher than the peak value of an output voltage of the AC power source. If the specification of the output voltage of the AC power source in actual use is indefinite, the DC voltage is set to be a voltage relatively higher than the voltage according to the general specification.

However, raising a set value of the DC voltage outputted from a converter means raising the maximum value of a voltage value given to an inverter device to which this DC voltage is inputted. This increases the loss of switching elements included in the converter and the inverter and the loss of a reactor interposed between the AC power source and the converter, which causes a problem that the efficiency of a converting device as a whole of a converter/inverter deteriorates.

To avoid such a situation, a method has been proposed in which an output voltage of an AC power source is detected and a lower limit value of a voltage at which the DC voltage is to be set is adjusted to be a value higher than the peak value of the detected voltage (for example, Patent Document 1 mentioned below).

Also there are known power converters (for example, Patent Document 3 mentioned below). Such power converters may be used to interface a generator that provides variable voltage at variable frequency to a supply network operating abnormally fixed voltage and nominally fixed frequency and including that allow the power converter to remain connected to the supply network and to retain control during supply network fault and transient conditions. A controller uses a DC link voltage demand signal indicating of a desired DC link voltage to control a semiconductor power switching device of a network bridged to achieve a desired level of DC link voltage that corresponds to the DC link voltage demand signal. A second controller uses a power demand signal indicated of the level of power to be transferred from the DC link to the supply network through the network bridge and a voltage demand signal indicating the voltage to be achieved at the network terminals of a filter to control the semi-conductor power swtiching devices of the network bridge to achieve the desired levels of power and voltage that correspond to the power and voltage demand signals.

Patent Document 1: Japanese Patent Application Laid-Open No. 7-245957
Patent Document 2: Japanese Patent Application Laid-Open No 2006-6406
Patent Document 3: US 2007/0121354 A1

### DISCLOSURE OF THE INVENTION

### PROBLEMS TO BE SOLVED BY THE INVENTION

However, this method requires a voltage detection circuit that detects the output voltage of the AC power source, which increases the size and the costs of a control circuit. Additionally, when a command value of the DC voltage is set, an error of the voltage detection circuit has to be considered, and it is difficult to limit a rise of the DC voltage to the minimum.

On the other hand, a method has been also proposed in which the command value of the DC voltage is set such that there is no difference between a modulation rate of a PWM converter and a modulation rate command value (for example, the Patent Document 2 mentioned above). In this method, the DC voltage can be controlled in accordance with a variation of the voltage of the AC power source, without the need to detect the output voltage of the AC power source.

However, in this method, in order to make the modulation rate coincident with the modulation rate command value, an integrator is required to compute the command value of the DC voltage. An integrator for obtaining a voltage command value used for a PWM control is also required. Thus, there is a problem that, in a case of a recovery after an instantaneous voltage drop, operations of the two kinds of integrators mentioned above interfere with each other to cause a overshoot of the DC voltage, as will be detailed later in a comparative example with respect to an embodiment of the present invention.

An object of the present invention is to control a DC voltage in accordance with a variation of a power source voltage without the need to detect an effective value of the power source voltage. If this object is achieved, the reliability of the control is improved, and moreover the breakdown voltage of an element is reduced.

In a preferred mode of the present invention, it is also an object to avoid an overshoot of a DC voltage in case of a recovery after an instantaneous voltage drop.

### MEANS FOR SOLVING THE PROBLEMS

A converter control method according to the present invention is a method of controlling a DC voltage (Vdc) in a converter (3) to which a multi-phase current (Ir, Is, It) is inputted from a multi-phase power source (1) and which performs switching to output the DC voltage (Vdc). The method having the feature of claim 1. A command value of the DC voltage is a DC voltage command value (Vdc*). A multi-phase voltage inputted to the converter is represented by a pair of a first voltage (Vd) and a second voltage (Vq) in a rotating coordinate system which rotates at a power-supply frequency (ω/2π) of the multi-phase power source. The second voltage has a phase advance of 90 degrees relative to the first voltage. Command values for the first voltage and the second voltage are a first voltage command value (Vd*) and a second voltage command value (Vq*), respectively.

In a first aspect of the converter control method according to the present invention, a deviation (ΔVdc) of the DC voltage with respect to the DC voltage command value (Vdc*) is obtained, the switching is controlled based on the first voltage command value and the second voltage command value, and the DC voltage command value is determined based on the first voltage command value.

For example, a square root of the sum of the square of the first voltage command value (Vd*) and the square of the second voltage command value (Vq*) is obtained as an estimate value of a voltage (Vi) of the multi-phase voltage which is inputted to the converter (3), and the DC voltage command value (Vdc*) is determined based on the estimate value.

For example, a reactor group (2) in which the multi-phase current (Ir, Is, It) flows is provided between the multi-phase power source (1) and the converter (3). A value (Vd*-r·Id) is obtained as an estimate value of a voltage (Vs) of the multi-phase power source, the value (Vd*-r·Id) being obtained by subtracting, from the first voltage command value (Vd*), a product of at least a resistance component (r) of the reactor group which is represented in the rotating coordinate system and a component (Id) having the same phase as that of the first voltage of the multi-phase current which is represented in the rotating coordinate system. The DC voltage command value (Vdc*) is determined based on the estimate value.

Alternatively, for example, a reactor group (2) in which the multi-phase current (Ir, Is, It) flows is provided between the multi-phase power source (1) and the converter (3). A value (Vi-r·Id) is obtained by subtracting a product of at least a resistance component (r) of the reactor group which is represented in the rotating coordinate system and a component (Id) having the same phase as that of the first voltage of the multi-phase current which is represented in the rotating coordinate system, from a voltage (Vi) of the multi-phase voltage which is inputted to the converter. The DC voltage command value (Vdc*) is determined based on the value.

Alternatively, for example, a value (Vs/cosΨ) is obtained as an estimate value of the multi-phase voltage (Vi) which is inputted to the converter, the value (Vs/cosΨ) being obtained by dividing an estimate value of a voltage (Vs) of the multi-phase power source by a cosine value (cosΨ) of an arc tangent (Ψ=tan⁻¹(Vq*/Vd*)) of a value resulting from the second voltage command value (Vq*) being divided by the first voltage command value (Vd*). The DC voltage command value (Vdc*) is determined based on the estimate value.

A second aspect of the converter control method according to the present invention is the first aspect thereof, in which a foodback loop including an integral element is removed from a determination of the DC voltage command value (Vdc*).

In the first and second aspects, for example, a linear calculation for the first voltage command value, an estimate value of the multi-phase voltage (Vi) which is inputted to the converter, or an estimate value of the voltage (Vs) of the multi-phase power source, is adopted for a determination of the DC voltage command value (Vdc*).

A third aspect of the converter control method according to the present invention is the second aspect thereof, in which a constant used in the calculation mentioned above is set in cooperation with an operation of an inverter (4) to which the DC voltage (Vdc) is inputted.

A fourth aspect of the converter control method according to the present invention is the first aspect or the second aspect thereof, including a filter process for the first voltage command value (Vd*), an estimate value of the multi-phase voltage (Vi) which is inputted to the converter (3), or an estimate value of the voltage (Vs) of the multi-phase power source.

### EFFECTS OF THE INVENTION

In the first aspect of the converter control method according to the present invention, a power supply phase of the multi-phase power source is required, but a voltage of the multi-phase power source is not required. Therefore, a circuit configuration for detecting a voltage of the multi-phase power source is not necessary, which makes it easy to control the DC voltage so as to improve a power factor of input power while suppressing the size and manufacturing costs.

In the second aspect of the converter control method according to the present invention, a time delay element such as the integral element is not included in the determination of the DC voltage command value. Accordingly, this determination is not delayed due to an instantaneous stop / recovery. Thus, occurrence of an overshoot of the DC voltage based on this delay can be avoided.

In the third aspect of the converter control method according to the present invention, the DC voltage can be set in accordance with driving of a load of the inverter. Therefore, an operating range of the inverter can be expanded.

In the fourth aspect of the converter control method according to the present invention, a primary delay element and the filter process such as an average computation are included in the determination of the DC voltage command value, and thereby a response of a control system which determines the DC voltage command value is made later than a response of a control system which determines the first voltage command value and the second voltage command value, so that a control which is stable with respect to a transient response is performed.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] A circuit diagram showing a converter, to which a converter control method according to an embodiment of the present invention is applied, and a configuration connected to the circumference thereof.
[FIG. 2] A circuit diagram showing a configuration of a conventional converter waveform control section.
[FIG. 3] A graph showing an operation of the conventional converter waveform control section.
[FIG. 4] A circuit diagram showing a configuration of a converter waveform control section according to a first embodiment of the present invention.
[FIG. 5] A graph showing an operation of the converter waveform control section according to the first embodiment of the present invention.
[FIG. 6] A circuit diagram showing a configuration of a converter waveform control section according to a second embodiment of the present invention.
[FIG. 7] A circuit diagram showing a configuration of a converter waveform control section according to a third embodiment of the present invention.
[FIG. 8] A block diagram illustrating a configuration of a voltage command value computing section.
[FIG. 9] A graph showing a relation between a DC voltage command value and a power source voltage.
[FIG. 10] A block diagram illustrating another configuration of the voltage command value computing section.
[FIG. 11] A graph showing a relation between a DC voltage command value and a power source voltage.
[FIG. 12] A block diagram illustrating still another configuration of the voltage command value computing section.
[FIG. 13] A graph showing a relation between a DC voltage command value and a power source voltage.
[FIG. 14] A block diagram illustrating still another configuration of the voltage command value computing section.
[FIG. 15] A block diagram illustrating still another configuration of the voltage command value computing section.

### BEST MODE FOR CARRYING OUT THE INVENTION

In the following, as is often the case in this field, a current and its value are denoted by the same reference character. For example, the expression of "current I" is used for representing both a current I flowing in a circuit and its value. The same applies to a voltage and other various amounts.

### A: Overall Configuration.

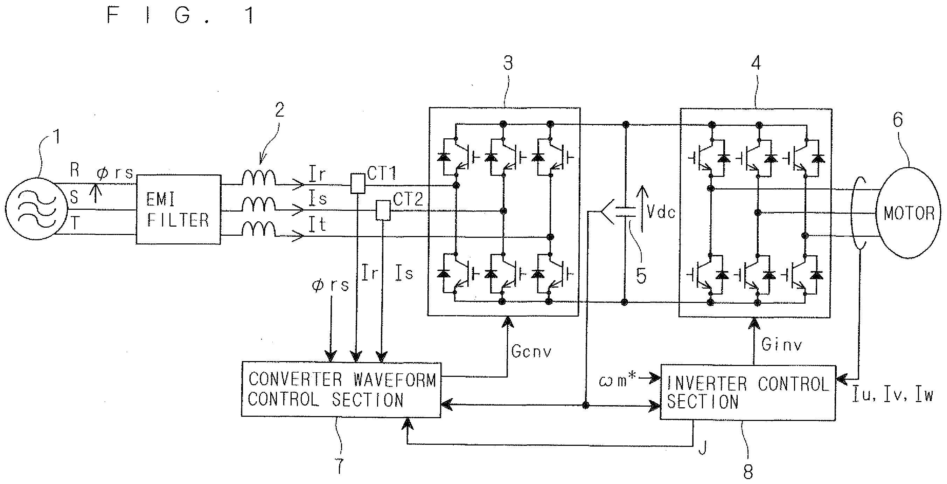

FIG. 1 is a circuit diagram showing a converter, to which a converter control method according to an embodiment of the present invention is applied, and a configuration connected to the circumference thereof.

A multi-phase power source 1 is a three-phase power source which outputs three-phase voltages of phases R, S, T. In this embodiment, the number of phases is three, but the number of phases is not limited to three.

Currents Ir, Is, It are inputted from the multi-phase power source 1 to a converter 3 via an EMI (Electro Magnetic Interference) filter and an input reactor group 2. The currents Ir, Is, It are line currents of the R phase, the S phase, and the T phase, respectively. The EMI filter removes a high-frequency noise and the like included in the currents Ir, Is, It. The input reactor group 2 prevents an inrush current from flowing into the converter 3, and moreover supports a potential difference between an input voltage of the converter 3 and an output voltage of the multi-phase power source 1.

The converter 3 is a voltage-source PWM converter having a well-known switching element, and performs switching of the switching element, to output a DC voltage Vdc.

The DC voltage Vdc is applied to the inverter 4, and a well-known inverter operation is performed so that three-phase currents Iu, Iv, Iw are outputted. The three-phase load 6 is supplied with the three-phase currents Iu, Iv, Iw, and driven. Here, a motor is shown as an example of the three-phase load 6. The number of phases of the current outputted by the inverter 4 is not limited to three.

A capacitor 5 which supports the DC voltage Vdc is provided in a DC link between the converter 3 and the inverter 4. However, the present invention is applicable to a converter employed in an AC-AC converter (in a broad sense) in which no capacitor 5 is provided.

Switching in the converter 3 and the inverter 4 is controlled based on switching control signals Gcnv and Ginv, respectively. The switching control signals Gcnv and Ginv are generated by a converter waveform control section 7 and an inverter control section 8, respectively.

The inverter control section 8 is generated based on a command value ωm* of a drive frequency of the three-phase load 6, the DC voltage Vdc, and the three-phase currents Iu, Iv, Iw. This generation is a well-known technique and not directly related to the present invention, and therefore details thereof are omitted.

The converter waveform control section 7 is generated based on a zero-crossing signal ϕrs of a voltage between R-S phases in the multi-phase power source 1, the line currents Ir, Is, It, and the DC voltage Vdc. Generally, there is the relation of It = -(Is+Ir). Therefore, in the configuration shown in FIG. 1, the line currents Ir, Is are obtained by current transformers CT1, CT2, respectively, and these are given to the converter waveform control section 7.

### B: Operation of Converter Waveform Control Section 7.

Before a description of an operation of the converter waveform control section 7 employed in this embodiment, a control method of a conventional converter will be described and problems thereof will be detailed firstly. Then, the fact that these problems are solved by the operation of the converter waveform control section 7 employed in this embodiment will be described.

### (b-1) Control Method of Conventional Converter.

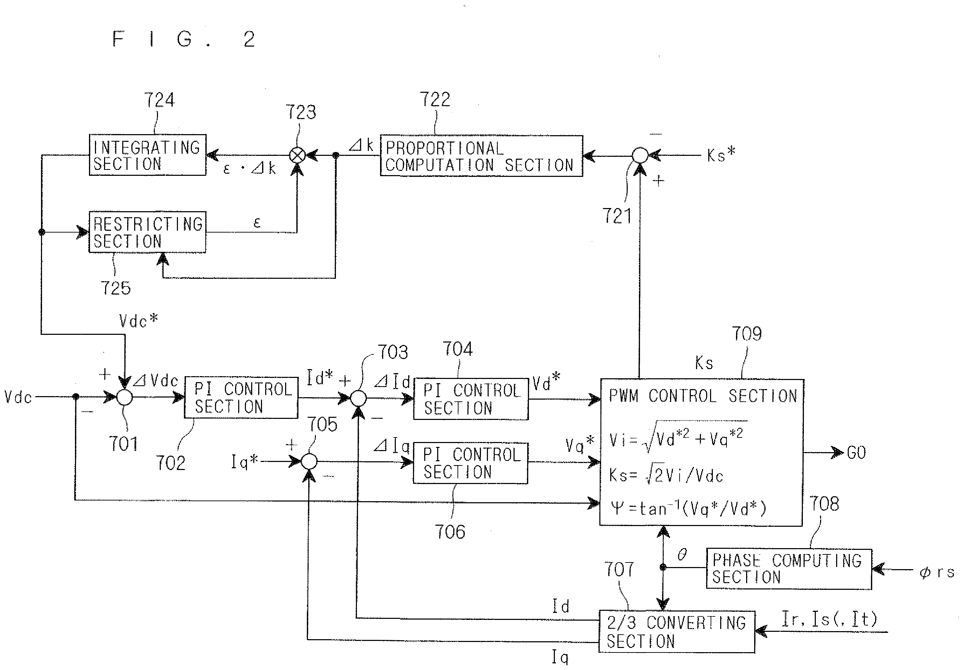

FIG. 2 is a circuit diagram showing a conventional configuration employable as the converter waveform control section 7 of FIG. 1. In this configuration, a switching control signal G0 is outputted as the switching control signal Gcnv. This configuration corresponds to a configuration obtained by simplifying the disclosure of the Patent Document 2.

Here, introduced is an expression using a d-axis and a q-axis employed in a rotating coordinate system which rotates at a power-supply frequency (ω/2π) of the multi-phase power source 1. The q-axis has a phase advance of 90 degrees relative to the d-axis. For example, a voltage Vi, which is an effective value per one phase of the voltage inputted to the converter 3, is represented by a pair of a d-axis voltage Vd and a q-axis voltage Vq. To be more specific, the square of the voltage Vi is equal to the sum of the square of the d-axis voltage Vd and the square of the q-axis voltage Vq.

A phase computing section 708 determines a power supply phase θ based on the zero-crossing signal ϕrs of the voltage between the R-S phases, and gives this to a phase converting section 707 and a PWM control section 709.

In accordance with the power supply phase θ, the phase converting section 707 performs a three-phase/two-phase conversion into a d-axis-q-axis coordinate system which is the above-mentioned rotating coordinate system, and calculates a d-axis current Id and a q-axis current Iq which are a d-axis component and a q-axis component of the line currents Ir, Is, It. The d-axis current Id and the q-axis current Iq contribute to active power and reactive power, respectively. Therefore, to improve a power factor, it is desirable that the q-axis current Iq is small.

As described above, the line current It is determined based on the line currents Ir, Is. Thus, an input of the line current It into the phase converting section 707 may be omitted, and in FIG. 2, this omission is indicated by the reference character It being in parenthesis.

An adder-subtracter 701 subtracts the DC voltage Vdc from a DC voltage command value Vdc*, to obtain a voltage deviation ΔVdc.

A PI control section 702 performs a PI control based on the voltage deviation ΔVdc, to thereby obtain a d-axis current command value Id*. The d-axis current command value Id* corresponds to a command value of the d-axis current Id.

An adder-subtracter 703 subtracts the d-axis current Id from the d-axis current command value Id*, to obtain a current deviation ΔId.

A PI control section 704 performs a PI control based on the current deviation ΔId, to thereby obtain a d-axis voltage command value Vd*. The d-axis voltage command value Vd* corresponds to a command value of the d-axis voltage Vd.

An adder-subtractor 705 subtracts the q-axis current Iq from a q-axis current command value Iq*, to obtain a current deviation ΔId. The q-axis current command value Iq* corresponds to a command value of the q-axis current Id.

A PI control section 706 performs a PI control based on the current deviation ΔIq, to thereby obtain a q-axis voltage command value Vq*. The q-axis voltage command value Vq* corresponds to a command value of the q-axis voltage Vq.

The d-axis voltage command value Vd*, the q-axis voltage command value Vq*, and the power supply phase θ are inputted to the PWM control section 709, and the switching control signal G0 is generated based on them. The switching control signal G0 is used as the switching control signal Gcnv shown in FIG. 1. The generation of the switching control signal G0 is performed using a well-known technique, and therefore a detailed description thereof is omitted.

As described above, the voltage Vi inputted to the converter 3 is represented by √(Vd²+Vq²), and therefore the voltage Vi is here estimated to be √(Vd^{*2}+Vq^{*2}). A phase difference between the voltage Vi and a power source voltage Vs is represented by Ψ=tan⁻¹(Vq*/Vd*).

Furthermore, the DC voltage Vdc is also given to the PWM control section 709, and a modulation rate Ks is obtained as √2(Vi/Vdc). As described above, the voltage Vi is the effective value per one phase of the voltage inputted to the converter 3, and therefore the modulation rate Ks is a ratio of the crest value of the input voltage Vi with respect to the DC voltage Vdc.

An adder-subtractor 721 subtracts, from the modulation rate Ks, its command value Ks*, and a resulting difference is subjected to a proportional computation in a proportional computation section 722, so that a deviation ΔK of the modulation rate is obtained. A multiplying section 723 multiplies the deviation ΔK by a coefficient ε which adopts two values of 0 or 1. An integrator 724 integrates a multiplying result ε·ΔK, to generate the DC voltage command value Vdc*.

A restricting section 725 has the DC voltage command value Vdc* inputted thereto, and when this is within a desired range, outputs the value 1 as the coefficient ε. When the DC voltage command value Vdc* is smaller than the desired range, the value 0 is adopted as the coefficient ε if the deviation ΔK is negative, and the value 1 is adopted as the coefficient ε if the deviation ΔK is positive. When the DC voltage command value Vdc* is larger than the desired range, the value 1 is adopted as the coefficient ε if the deviation ΔK is negative, and the value 0 is adopted as the coefficient ε if the deviation ΔK is positive. In this manner, using a negative correlation between the DC voltage command value Vdc* and the modulation rate Ks, an excessive increase of an integrate value in the integrating section 724 is limited.

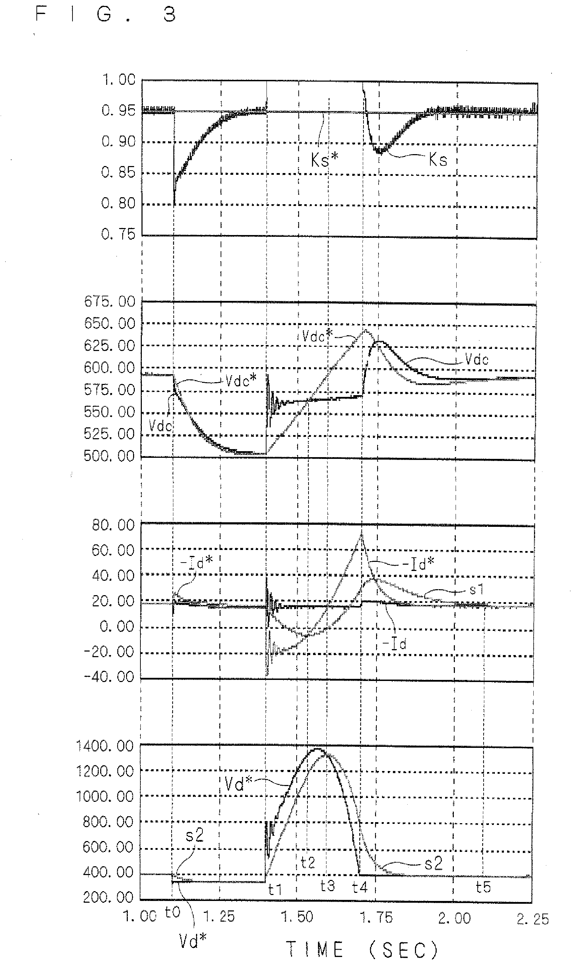

FIG. 3 contains graphs showing operations of the respective sections of the configuration shown in FIG. 2, in a case where a power source voltage instantaneously drops from 400V to 340V, and then recovers. Here, a time of occurrence of the instantaneous voltage drop and a time of the recovery are indicated by times t0 and t1, respectively.

Here, a case is considered where the d-axis current command value Id* is negative in a steady state. In the graphs, values -Id* and -Id, which are obtained by changing the signs of the d-axis current command value Id* and the d-axis current Id, respectively, are indicated.

At the time t0, the instantaneous voltage drop occurs and thus the absolute value of the d-axis current Id instantaneously drops (see the third graph from the top in FIG. 3: a variation of the value -Id at the time t0 is rapid and indicated as a downward line in the graph).

This variation of the d-axis current Id causes a steep drop of the d-axis voltage command value Vd* outputted by the PI control section 704 (the fourth graph from the top in FIG. 3). Since the computation in the PI control section 704 includes an integral term, a value s2 based on the integral term gently drops. However, ordinarily, the integral term has a small influence and a proportional term has a large influence in the PI control section 704. Therefore, the d-axis voltage command value Vd* is largely affected by the variation of the d-axis current Id, as described above.

The steep drop of the d-axis voltage command value Vd* causes a steep drop of the voltage Vi. Since the drop of the DC voltage Vdc is slower than this steep drop of the voltage Vi, the modulation rate Ks rapidly drops (the first graph from the top in FIG. 3). Then, the DC voltage Vdc also drops (the second graph from the top in FIG. 3), and thereby the modulation rate Ks rises (the first graph from the top in FIG. 3).

Since the modulation rate Ks drops relative to the modulation rate command value Ks*, the deviation ΔK is negative, and the DC voltage command value Vdc* also gradually drops due to the function of the integrating section 724. However, immediately after the time t0, the DC voltage command value Vdc* drops at a lower speed than the DC voltage Vdc does, and therefore the deviation ΔVdc swings to the positive and the d-axis current command value Id* is lowered (the value -Id* rises). Then, the DC voltage command value Vdc* also decreases, and thus the deviation ΔVdc becomes small (see the second graph from the top in FIG. 3).

The power source recovers at the time t1 , then the DC voltage Vdc is charged to approximately 565V which is the peak value of the power source voltage. However, since the DC voltage command value Vdc* increases due to the integration computation in the integrating section 724, the speed of the increase is low. Therefore, the deviation ΔVdc suddenly becomes negative at the time t1.

Thus, the d-axis current command value Id* outputted by the PI control section 702 rapidly increases (the value -Id* decreases), and the current deviation ΔId becomes positive. Accordingly, the d-axis voltage command value Vd* outputted by the PI control section 704 increases. As described above, since the integral term has a small influence and the proportional term has a large influence in the PI control section 704, the d-axis voltage command value Vd* rapidly increases.

Thereby, the voltage vi rapidly rises, and the modulation rate Ks reaches the upper limit value 1. Here, the converter 3 operates as a buck-converting device with respect to the DC voltage Vdc, and therefore operates in a rectifier mode and the modulation rate Ks adopts the maximum value 1. Thereby, the deviation ΔK becomes positive.

Since the deviation ΔK is positive, due to the integration computation in the integrating section 724, the DC voltage command value Vdc* slowly rises and then coincides with the DC voltage Vdc at a time t2. In the same manner, in a period of the times t1 to t2, due to the integrating operation of the deviation ΔVdc (<0) in the PI control section 702, the value s1 based on the integral term is gently lowered. However, after the time t2, the DC voltage command value Vdc* continues to rise. Therefore, at or after the time t2, the deviation ΔVdc becomes positive, and the value s1 slowly rises.

Due to the slow increase of the DC voltage command value Vdc*, the d-axis current command value Id* gently decreases (the value -Id* increases), and coincides with the d-axis current Id at a time t3. That is, until the time t3, the value s2 based on the integral term in the PI control section 704 continues to increase gently, and then decreases. However, as described above, the integral term has a small influence in the PI control section 704. Therefore, a timing at which the d-axis voltage command value Vd* adopts the local maximum value is earlier than the time t3 at which the value s2 adopts the local maximum value.

Even when the deviation ΔId becomes zero at the time t3, unless the d-axis voltage command value Vd* falls lower than the power source voltage 400V, the converter 3 operates in the rectifier mode and the modulation rate Ks continues to adopt the maximum value 1, as described above. Accordingly, the deviation ΔK is positive, and due to the function of the integrating section 724, the DC voltage command value Vdc* continues to increase and the d-axis current command value Id* continues to decrease gently (the value -Id* continues to increase).

The d-axis voltage command value Vd* falls lower than 400V at a time t4, then the converter 3 recovers from the rectifier mode to a normal converter operation. Thereby, an overshoot occurs in the DC voltage Vdc, and an undershoot occurs in the modulation rate Ks. Moreover, since the value -Id* is lowered (the d-current command value Id* increases), the value -Id* is shown as an overshoot in FIG. 3. While the DC voltage Vdc is recovering to the steady state, an overshoot occurs also in the value s1.

Then, the operations of the respective sections are stabilized at a time t5.

### (b-2) Converter Control Method according to First Embodiment.

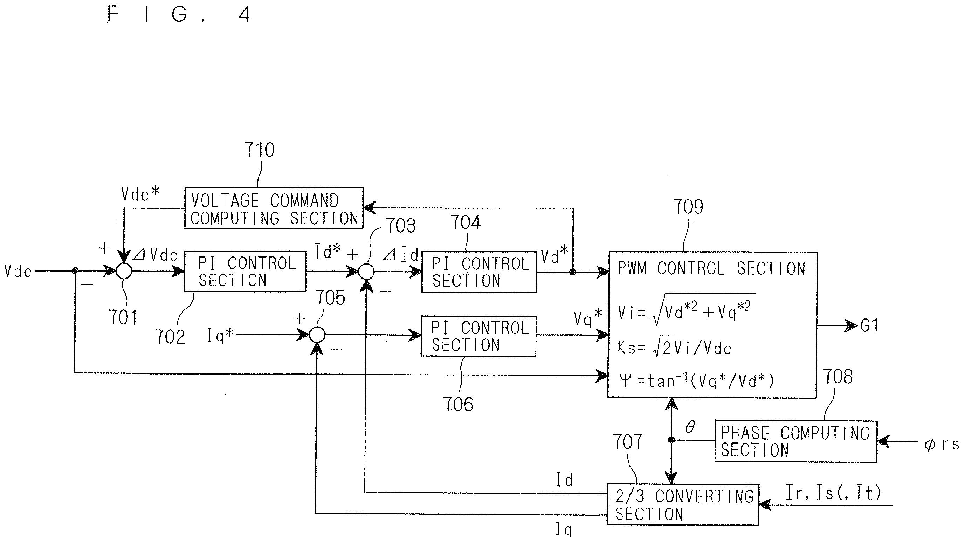

FIG. 4 is a circuit diagram showing a configuration of a converter waveform control section according to a first embodiment, which is employable as the converter waveform control section 7 of FIG. 1. In this configuration, a switching control signal G1 is outputted as the switching control signal Gcnv.

As adder-subtractors 701, 703, 705, PI control sections 702, 704, 706, a phase converting section 707, a phase computing section 708, and a PWM control section 709 employed in the converter waveform control section according to this embodiment, those shown in FIG. 2 are employed.

In this configuration, a voltage command value computing section 710 is employed instead of the adder-subtractor 721, the proportional computation section 722, the multiplying section 723, the integrator 724, and the restricting section 725 which are shown in FIG. 2.

The voltage command value computing section 710 generates the DC voltage command value Vdc based on the d-axis voltage command value Vd* outputted from the PI control section 704, and gives this to the adder-subtractor 701. In this manner, the generation of the DC voltage command value Vdc* is based on the d-axis voltage command value Vd*. Although a power supply phase is required, a voltage itself of a multi-phase power source is not required. Accordingly, a circuit configuration for detecting a voltage of a multi-phase power source is not necessary, which makes it easy to control the DC voltage Vdc so as to improve a power factor while suppressing the size and the manufacturing costs.

Particularly, when a control for making a q-current Iq zero is performed, it is desirable that the DC voltage command value Vdc* is determined based on a value (Vd*-r·Id) obtained by subtracting from the d-axis voltage command value Vd* the product r-Id of at least a resistance component r of the reactor group 2 and the d-axis current Id. This is because, based on the definition of the d-axis mentioned above, in the steady state, the value (Vd*-r·Id) is an estimate value of the power source voltage, and a control of the DC voltage Vdc substantially based on a power source voltage can be realized without actually measuring the power source voltage. In this case, it is desirable that the value of the resistance component r is stored in the voltage command value computing section 710 or inputted from the outside. The d-axis current Id can be obtained from the phase converting section 707.

To indicate this in more detail using a mathematical formula, generally, Vd = Vs+(Ls+r)Id-ωL·Iq, and Vq = (Ls+r)Iq+ωL·Id are satisfied, where it is assumed that Ld = Lq = L for the sake of simplification and a power source voltage Vs and a differential operator s are introduced. Iq=0 (the q-current Iq is zero) is substituted into the first formula, and in the steady state, a computation result due to the differential operator s becomes zero. Thus, Vd = Vs+r·Id is obtained, and Vs = Vd-r·Id is satisfied. In this embodiment, the d-axis voltage Vd and the power source voltage Vs are not measured. Therefore, using the d-axis voltage command value Vd* instead of the d-axis voltage Vd, the value (Vd*-r·Id) is treated as an estimate value of the power source voltage Vs.

Here, the DC voltage command value Vdc* may be determined based on a value (Vi-r·Id) obtained by subtracting at least the product r·Id from the voltage Vi (or its estimate value) inputted to the converter 3. Particularly when the phase difference Ψ is small, the power source voltage Vs is substantially equal to the voltage Vi, and therefore such a determination may be performed.

It is desirable that a foodback loop including an integral element is removed from the determination of the DC voltage command value Vdc*. In this case, this determination is not delayed due to an instantaneous stop / recovery. Thus, occurrence of an overshoot of the DC voltage Vdc based on this delay can be avoided.

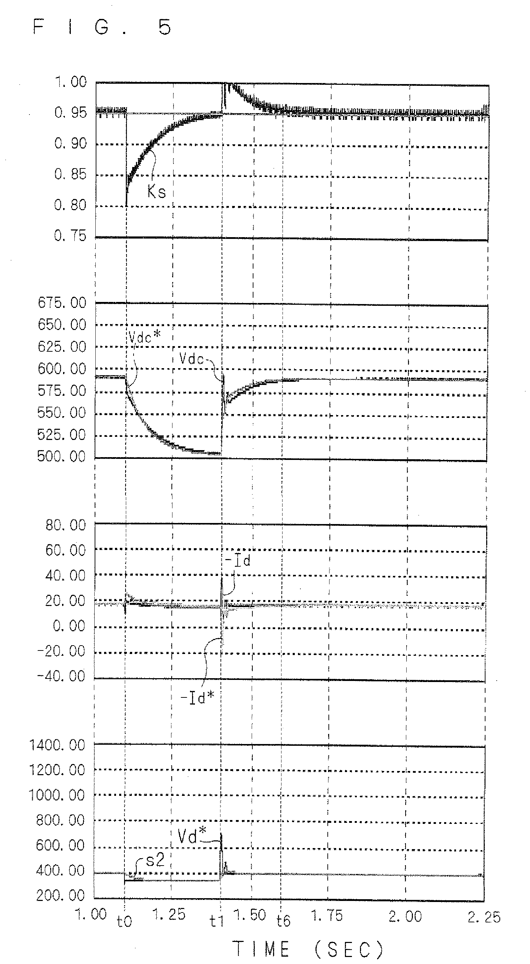

FIG. 5 contains graphs showing operations of the respective sections of the configuration shown in FIG. 4, in a case where a power source voltage instantaneously drops from 400V to 340V, and then recovers. Similarly to FIG. 3, a time of occurrence of the instantaneous voltage drop and a time of the recovery are indicated by times t0 and t1, respectively.

Here, a case is shown where the DC voltage command value Vdc* is set such that the d-axis voltage command value Vd* is multiplied by a predetermined coefficient and the same modulation rate Ks as shown in FIG. 3 can be obtained.

Unlike the operation described in (b-1), there is no integrating operation in the integrating section 724, and after the time t1, the d-axis voltage command value Vd* and the DC voltage command value Vdc* steeply change. Accordingly, the decrease of the d-axis current command value Id* (the increase of the value -Id*), which is observed in a period of times t1 to t4 of FIG. 3, occurs in a very short period. Therefore, no undershoot occurs in the modulation rate Ks, and the operations of the respective sections are stabilized at the time t6.

### (b-3) Converter Control Method according to Second Embodiment.

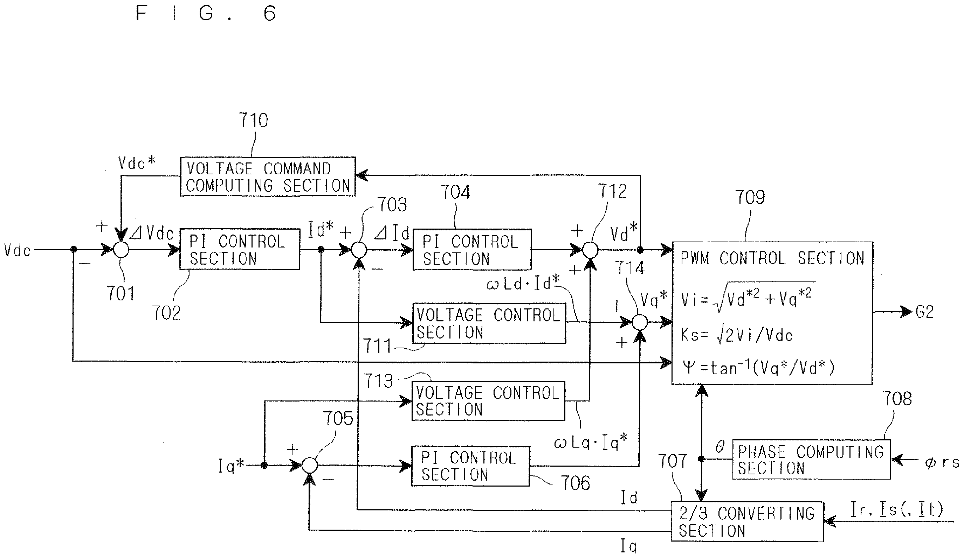

FIG. 6 is a circuit diagram showing a configuration according to a second embodiment, which is employable as the converter waveform control section 7 of FIG. 1. In this configuration, a switching control signal G2 is outputted as the switching control signal Gcnv.

The configuration employed in the second embodiment has, in addition to the configuration employed in the first embodiment, voltage control sections 711, 713 and adders 712, 714.

The voltage control section 711 outputs, to the adder 712, a product ωLd·Id* of the d-axis current command value Id*, a d-axis inductance Ld of the reactor group 2, and an angular frequency ω of the power source voltage. The voltage control section 713 outputs, to the adder 714, a product ωLq·Iq* of the q-axis current command value Iq*, a q-axis inductance Lq of the reactor group 2, and the angular frequency ω. The d-axis inductance Ld and the q-axis inductance Lq are obtained by converting an inductance of the reactor group 2 into the d-axis-q-axis coordinate system. Here, it is assumed that the values of respective reactors included in the reactor group 2 are equal to one another.

The angular frequency ω is obtained from a power-supply frequency f (ω=2πf). It is desirable that the value of the power-supply frequency f is stored in the voltage command value computing section 710 or inputted from the outside (calculated from the zero-crossing signal ϕrs). The inputs of the angular frequency ω into the voltage control sections 711, 713 are omitted for avoiding complication of the drawing.

The adder 712 adds the product ωLd·Id* to an output of the PI control section 704, to generate the d-axis voltage command value Vd*. The adder 714 adds the product ωLq·Iq* to an output of the PI control section 706, to generate the q-axis voltage command value Vq*. In other words, the voltage control sections 711, 713 and the adders 712, 714 have a function to compensate for an interference term which is caused by the reactor group 2. The compensation itself for the interference term is a well-known technique, and thus a detailed description thereof is omitted.

### (b-4) Converter Control Method according to Third Embodiment.

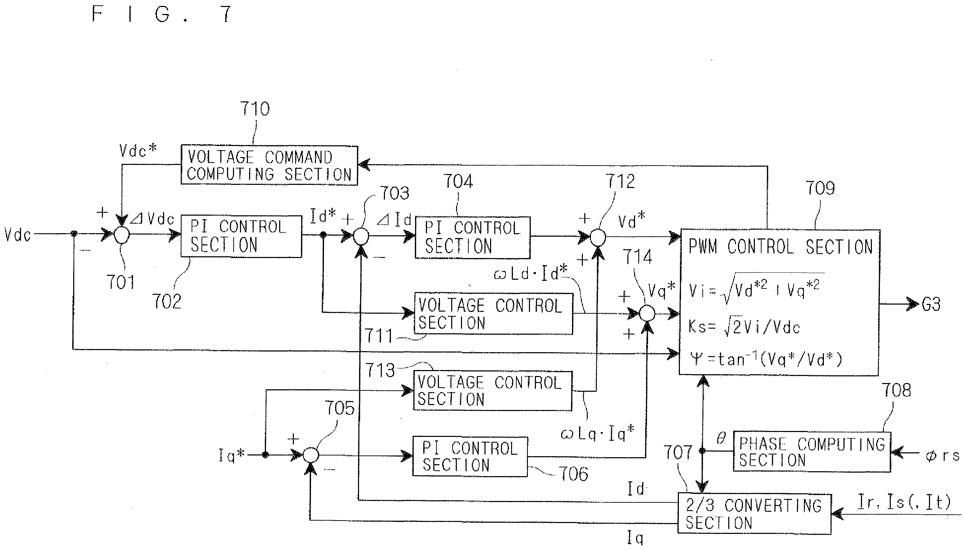

FIG. 7 is a circuit diagram showing a configuration according to a third embodiment, which is employable as the converter waveform control section 7 of FIG. 1. In this configuration, a switching control signal G3 is outputted as the switching control signal Gcnv.

The configuration employed in the third embodiment is different from the configuration employed in the second embodiment, in that the voltage command value computing section 710 does not obtain the DC voltage command value Vdc* based on the d-axis voltage command value Vd*, but adopts an estimate value of the voltage Vi estimated to be √(Vd^{*2}+Vq^{*2}) in the PWM control section 709.

Needless to say, in this embodiment as well, the voltage control sections 711, 713 and the adders 712, 714 may be omitted similarly to the first embodiment.

Considering that there is the above-mentioned phase difference Ψ between the power source voltage Vs (an estimate value thereof) and the voltage Vi, the estimate of the voltage Vi may be obtained based on Vs/cosΨ.

C: Operation of Voltage Command Value Computing Section 710.

Specifically, the DC voltage command value Vdc* may be set in the following manner.

### (c-1) Proportional Calculation.

For example, a product of the d-axis voltage command value Vd* and a constant √2·K1 is adopted as the DC voltage command value Vdc*. In this case, a constant K1 corresponds to a boosting rate in a case of no load (Id=0), and this boosting rate can be kept constant even if the power source voltage varies.

Alternatively, a product of the constant √2·K1 and the estimate value Vi of the multi-phase voltage which is inputted to the converter 3 is adopted as the DC voltage command value Vdc*. In this case, the constant K1 corresponds to the modulation rate Ks, and the modulation rate Ks can be kept constant even if the power source voltage varies.

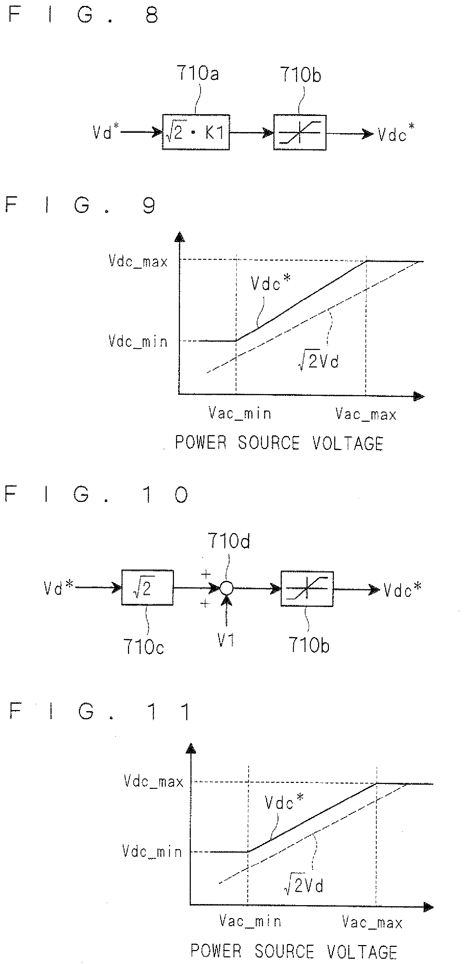

However, it is actually desirable to set upper limit / lower limit of the DC voltage command value Vdc*. FIG. 8 is a block diagram illustrating a configuration of the voltage command value computing section 710, and FIG. 9 is a graph showing a relation between the DC voltage command value Vdc* and the power source voltage.

The d-axis voltage command value Vd* is inputted to the proportional calculation section 710a, and the proportional calculation section 710a gives a product of the d-axis voltage command value Vd* and the constant √2·K1 to a limiter 710b. The limiter 710b slices the aforementioned product at a lower limit value Vdc_min and a upper limit value Vdc_max, and outputs it as the DC voltage command value Vdc*. In a power-source-voltage range (Vac_min to Vac_max) which allows the DC voltage command value Vdc* to have a value between the lower limit value Vdc_min and the upper limit value Vdc_max, the boosting rate can be kept constant.

In FIGs. 8 and 9, if the d-axis voltage command value Vd* is replaced with the estimate value Vi of the multi-phase voltage which is inputted to the converter 3, the modulation rate is kept constant in the power-source-voltage range (Vac_min to Vac_max).

### (c-2) Linear Calculation.

For example, a value (√2·Vd*+V1) obtained by adding a constant V1 to a product of the d-axis voltage command value Vd* and √2 is adopted as the DC voltage command value Vdc*. Alternatively, a value (√2·Vi+V1) obtained by adding the constant V1 to a product of √2 and the estimate value Vi of the multi-phase voltage which is inputted to the converter 3 is adopted as the DC voltage command value Vdc*.

In this case, the constant V1 gives a constant boosting to the DC voltage command value Vdc*. Therefore, as compared with the case where the proportional calculation indicated in (c-1) is adopted, a range of variation of the DC voltage command value Vdc*, which occurs when the power source voltage varies, can be restricted.

FIG. 10 is a block diagram illustrating a configuration of the voltage command value computing section 710, and FIG. 11 is a graph showing a relation between the DC voltage command value Vdc* and the power source voltage.

The d-axis voltage command value Vd* is inputted to the proportional calculation section 710c, and the proportional calculation section 710c multiplies the d-axis voltage command value Vd* by √2 and gives a resultant to an adder 710d. The adder 710d adds the constant V1 to √2·Vd*, and gives a resultant to the limiter 710b. The limiter 710b slices the value (√2·Vd*+V1) at the lower limit value Vdc_min and the upper limit value Vdc_max, and outputs it as the DC voltage command value Vdc*. In FIGs. 10 and 11, the d-axis voltage command value Vd* can be replaced with the estimate value Vi of the multi-phase voltage which is inputted to the converter 3 .

Alternatively, for example, a value resulting from a K2-times multiplication of a value (√2·Vd*+V2) obtained by adding a constant V2 to the product of the d-axis voltage command value Vd* and √2 is adopted as the DC voltage command value Vdc*. Alternatively, a value resulting from a K2-times multiplication of a value (√2·Vi+V2) obtained by adding the constant V2 to the product of √2 and the estimate value Vi of the multi-phase voltage which is inputted to the converter 3 is adopted as the DC voltage command value Vdc*.

Since the transformation of (√2·Vd*+V2)×K2 = √2·Vd*×K2+V2×K2 = √2·Vd*×K1+V1 is possible, it can be seen that a range of change of the DC voltage Vdc can be reduced while the value of K1 is made constant to suppress a boost of the DC voltage Vdc. This is desirable, from the viewpoint of avoiding a situation where when the DC voltage Vdc drops, an operating range of the inverter 4 cannot be fulfilled because of the drop.

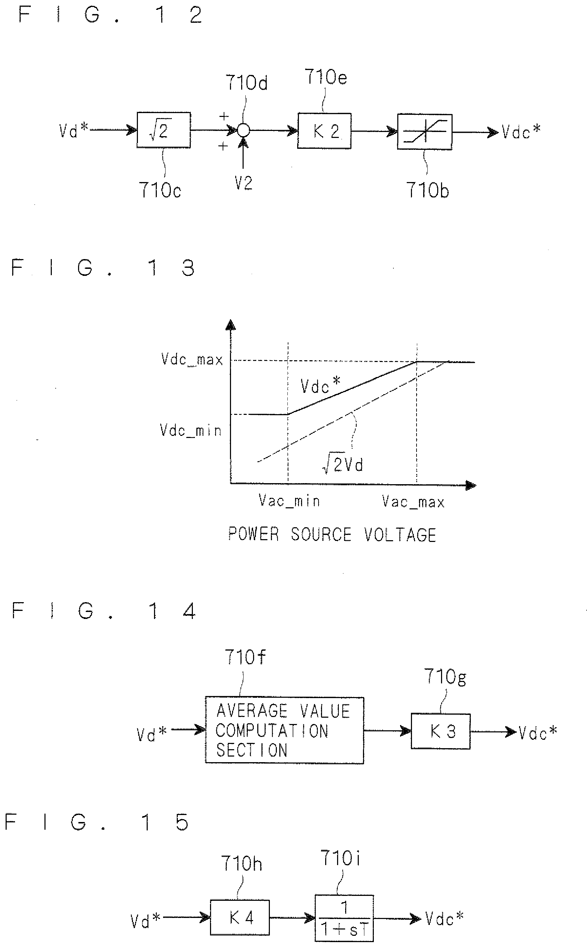

FIG. 12 is a block diagram illustrating a configuration of the voltage command value computing section 710, and FIG. 13 is a graph showing a relation between the DC voltage command value Vdc and the power source voltage.

The d-axis voltage command value Vd* is inputted to the proportional calculation section 710c, and the proportional calculation section 710c multiplies the d-axis voltage command value Vd* by √2 and gives a resultant to the adder 710d. The adder 710d adds the constant V2 to the value √2·Vd*, and gives a resultant to a multiplier 710e. The multiplier 710e gives the value (√2·Vd*+V2)×K2 to the limiter 710b. The limiter 710b slices the value (√2·Vd*+V2)×K2 at the lower limit value Vdc_min and the upper limit value Vdc_max, and outputs it as the DC voltage command value Vdc*. In FIGs. 12 and 13, the d-axis voltage command value Vd* can be replaced with the estimate value Vi of the multi-phase voltage which is inputted to the converter 3.

### (c-3) Filter Process.

FIG. 14 is a block diagram illustrating a configuration of the voltage command value computing section 710. An average value computation section 710f obtains an average value of the d-axis voltage command value Vd* in a predetermined period. A proportional calculation section 710f multiplies this average value by a constant K3, and outputs the DC voltage command value Vdc*.

FIG. 15 is a block diagram illustrating another configuration of the voltage command value computing section 710. A proportional calculation section 710h obtains a product of the d-axis voltage command value Vd* and a constant K4. A primary delay computation section 710i performs a primary delay computation on this product.

In both of the two kinds of configurations described above, a filter process for the d-axis voltage command value Vd* is performed, so that a high-frequency fluctuation component of the DC voltage command value Vdc* can be removed. A control system which is stable with respect to a transient response can be formed by making a response of the voltage command value computing section 710 for determining the DC voltage command value Vdc* sufficiently later than a response (specifically, responses of the PI control sections 702, 704) for obtaining the d-axis voltage command value Vd* based on the deviation ΔVdc and a response (specifically, a response of the PI control section 706) for obtaining the q-axis voltage command value Vq*. The d-axis voltage command value Vd* may be replaced with the estimate value Vi of the multi-phase voltage which is inputted to the converter 3.

From the viewpoint of avoiding the overshoot and the undershoot described in (b-1), it is not desirable to obtain the DC voltage command value Vdc* with an integration calculation. However, it is possible to control the DC voltage Vdc in accordance with a variation of the power source voltage without the need to detect an effective value of the power source voltage.

### D: Inverter Control

The computation of the DC voltage command value Vd* may be changed in accordance with a command value J (see FIG. 1) from the inverter control section 8. To be specific, for example, when the three-phase load 6 is a motor and there is a need to rotate the motor at a high speed, the inverter 4 should be driven so as to fulfill the need. For such a driving, the inverter control section 8 causes the inverter 4 to perform a high-speed rotation driving of the motor, for example, to advance the current phase and perform a field-weakening control. When the inverter 4 is caused to perform such a high-speed rotation driving, the inverter control section 8 outputs the command value J, thereby controlling the operation of the converter waveform control section 7.

More specifically, which of the proportional calculation, the linear calculation, and the integration calculation illustrating in the above section "C" is adopted in the operation of the voltage command value computing section 710 is determined, and furthermore the proportional constants K1 , K2, V1, and V2 are set.

The operation of the converter waveform control section 7 and consequently the operation of the converter 3, and the operation of the inverter control section 8 and consequently the operation of the inverter 4 cooperate with each other, and thereby the DC voltage Vdc can be set high only when a high-speed rotation of the motor is required. This enables expansion of the inverter operating range, by normally performing a high-efficiency control with suppressing of a boosting of the DC voltage Vdc and realizing a high-speed rotation only when needed.

## Claims

1. A converter control method of controlling a DC voltage (Vdc) in a converter (3) to which a multi-phase current (Ir, Is, It) is inputted from a multi-phase power source (1) and which performs switching to output said DC voltage (Vdc),
a command value of said DC voltage being a DC voltage command value (Vdc*),
a multi-phase voltage inputted to said converter being represented by a pair of a first voltage (Vd) and a second voltage (Vq) in a rotating coordinate system which rotates at a power-supply frequency (ω/2π) of said multi-phase power source,
said second voltage having a phase advance of 90 degrees relative to said first voltage,
command values for said first voltage and said second voltage being a first voltage command value (Vd*) and a second voltage command value (Vq*), respectively,
said converter control method comprising the steps of:
obtaining a deviation (ΔVdc) of said DC voltage with respect to said DC voltage command value (Vdc*);
controlling said switching based on said first voltage command value and said second voltage command value; and being **characterized by**
determining said DC voltage command value (Vdc*) based on said first voltage command value (Vd*).

2. The converter control method according to claim 1, futher comprising the steps of:
obtaining a square root of the sum of the square of said first voltage command value (Vd*) and the square of said second voltage command value (Vq*) as an estimate value of a voltage (Vi) of said multi-phase voltage which is inputted to said converter (3); and
determing said DC voltage command value (Vdc*) based on said estimate value.

3. The converter control method according to claim 1, wherein
a reactor group (2) in which said multi-phase current (Ir, Is, It) flows is provided between said multi-phase power source (1) and said converter (3),
said converter control method further comprising the steps of:
obtaining a value (Vd*-r·Id) as an estimate value of a voltage (Vs) of said multi-phase power source, said value (Vd*-r·Id) being obtained by subtracting, from said first voltage command value (Vd*), a product (r·Id) of a resistance component (r) of said reactor group which is represented in said rotating coordinate system and a component (Id) having the same phase as that of said first voltage of said multi-phase current which is represented in said rotating coordinate system; and
determining said DC voltage command value (Vdc*) based on said estimate value.

4. The converter control method according to claim 1, wherein
a reactor group (2) in which said multi-phase current (Ir, Is, It) flows is provided between said multi-phase power source (1) and said converter (3),
said converter control method further comprising the steps of:
obtaining a value (Vi-r·Id) by subtracting a product of a resistance component (r) of said reactor group which is represented in said rotating coordinate system and a component (Id) having the same phase as that of said first voltage of said multi-phase current which is represented in said rotating coordinate system, from a voltage (Vi) of said multi-phase voltage which is inputted to said converter, or from an estimate value thereof; and
determining said DC voltage command value (Vdc*) based on said value.

5. The converter control method according to claim 1, further comprising the steps of:
obtaining a value (Vs/cosΨ) as an estimate value of said multi-phase voltage (Vi) which is inputted to said converter (3), said value (Vs/cosΨ) being obtained by dividing an estimate value of a voltage (Vs) of said multi-phase power source by a cosine value (cosΨ) of an arc tangent (Ψ=tan⁻¹(Vq*/Vd*)) of a value resulting from said second voltage command value (Vq*) being divided by said first voltage command value (Vd*); and
determining said DC voltage command value (Vdc*) based on said estimate value.

6. The converter control method according to any one of claims 1 to 5, wherein
a feedback loop including an integral element is removed from a determination of said DC voltage command value (Vdc*).

7. The converter control method according to any one of claims 1 to 5, wherein
a linear calculation for said first voltage command value, an estimate value of the multi-phase voltage (Vi) which is inputted to said converter (3), or an estimate value of the voltage (Vs) of said multi-phase power source, is adopted in said determining of said DC voltage command value (Vdc*).

8. The converter control method according to claim 7, wherein
a constant used in said linear calculation is set in cooperation with an operation of an inverter (4) to which the DC voltage (Vdc) is inputted.

9. The converter control method according to any one of claims 1 to 5, including
a filter process for said first voltage command value (Vd*), an estimate value of the multi-phase voltage (Vi) which is inputted to said converter (3), or an estimate value of the voltage (Vs) of said multi-phase power source.

## Patentansprüche

1. Umsetzersteuerverfahren zum Steuern einer Gleichspannung (Vdc) in einem Umsetzer (3), in den ein Mehrphasenstrom (Ir, Is, It) von einer Mehrphasenstromquelle (1) eingegeben wird und der Umschalten durchführt, um die Gleichspannung (Vdc) auszugeben, wobei
ein Befehlswert der Gleichspannung ein Gleichspannungsbefehlswert (Vdc*) ist, eine Mehrphasenspannung, die in den Umsetzer eingegeben wird, von einem Paar einer ersten Spannung (Vd) und einer zweiten Spannung (Vq) in einem Drehkoordinatensystem dargestellt wird, das sich mit einer Leistungszufuhrfrequenz (ω/2π) der Mehrphasenleistungsquelle dreht,
die zweite Spannung einen Phasenvorsprung von 90 Grad relativ zur ersten Spannung aufweist,
Befehlswerte für die erste und die zweite Spannung ein erster Spannungsbefehlswert (Vd*) beziehungsweise ein zweiter Spannungsbefehlswert (Vq*) sind,
das Umsetzersteuerverfahren die Schritte umfasst zum:
Erhalten einer Abweichung (ΔVdc) der Gleichspannung in Bezug auf den Gleichspannungsbefehlswert (Vdc*);
Steuern des Umschaltens basierend auf dem ersten Spannungsbefehlswert und dem zweiten Spannungsbefehls wert; und **gekennzeichnet durch**
Bestimmen des Gleichstrombefehlswerts (Vdc*) basierend auf dem ersten Spannungsbefehlswert (Vd*).

2. Umsetzersteuerverfahren nach Anspruch 1, weiter umfassend die Schritte zum:
Erhalten einer Quadratwurzel der Summe des Quadrats des ersten Spannungsbefehlswerts (Vd*) und des Quadrats des zweiten Spannungsbefehlswerts (Vq*) als einen Schätzwert einer Spannung (Vi) der Mehrphasenspannung, die in den Umsetzer (3) eingegeben wird; und
Bestimmen des Gleichspannungsbefehlswerts (Vdc*) basierend auf dem Schätzwert.

3. Umsetzersteuerverfahren nach Anspruch 1, wobei
eine Drosselspulengruppe (2), in der der Mehrphasenstrom (Ir, Is, It) fließt, zwischen der Mehrphasenleistungsquelle (1) und dem Umsetzer (3) bereitgestellt wird,
das Umsetzersteuerverfahren weiter die Schritte umfasst zum:
Erhalten eines Werts (Vd*-r·Id) als einen Schätzwert einer Spannung (Vs) der Mehrphasenstromquelle, wobei der Wert (Vd*-r·Id) durch Subtrahieren, vom ersten Spannungsbefehlswert (Vd*), eines Produkts (r·Id) einer Widerstandskomponente (r) der Drosselspulengruppe, die im Drehkoordinatensystem dargestellt wird, und einer Komponente (Id), die diesel be Phase wie die der ersten Spannung des Mehrphasenstroms aufweist, der im Drehkoordinatensystem dargestellt wird, erhalten wird; und
Bestimmen des Gleichspannungsbefehlswerts (Vdc*) basierend auf dem Schätzwert.

4. Umsetzersteuerverfahren nach Anspruch 1, wobei
eine Drosselspulengruppe (2), in der der Mehrphasenstrom (Ir, Is, It) fließt, zwischen der Mehrphasenleistungsquelle(1) und dem Umsetzer (3) bereitgestellt wird,
das Umsetzersteuerverfahren weiter die Schritte umfasst zum:
Erhalten eines Werts (Vi-r·Id) durch Subtrahieren eines Produkts einer Widerstandskomponente (r) der Drosselspulengruppe, die im Drehkoordinatensystem dargestellt wird, und einer Komponente (Id), die dieselbe Phase wie die der ersten Spannung des Mehrphasenstroms aufweist, der im Drehkoordinatensystem dargestellt wird, von einer Spannung (Vi) der Mehrphasenspannung, die in den Umsetzer eingegeben wird, oder von einem Schätzwert davon; und
Bestimmen des Gleichspannungsbefehlswerts (Vdc*) basierend auf dem Wert.

5. Umsetzersteuerverfahren nach Anspruch 1, weiter umfassend die Schritte zum:
Erhalten eines Werts (Vs/cosΨ) als einen Schätzwert der Mehrphasenspannung (Vi), die in den Umsetzer (3) eingegeben wird, wobei der Wert (Vs/cosΨ) durch Dividieren eines Schätzwerts einer Spannung (Vs) der Mehrphasenleistungsquelle durch einen Cosinus-Wert (cosΨ) einer Bogentangente (Ψ=tan⁻¹(Vq*/Vd*)) eines Werts, der aus dem Dividieren des zweiten Spannungsbefehlswerts (Vq*) durch den ersten Spannungsbefehlswert (Vd*) resultiert, erhalten wird; und
Bestimmen des Gleichspannungswerts (Vdc*) basierend auf dem Schätzwert.

6. Umsetzersteuerverfahren nach einem der Ansprüche 1 bis 5, wobei
eine Rückkopplungsschleife, die ein ganzzahliges Element beinhaltet, aus einer Bestimmung des Gleichspannungswerts (Vdc*) entfernt wird.

7. Umsetzersteuerverfahren nach einem der Ansprüche 1 bis 5, wobei
eine lineare Berechnung für den ersten Spannungsbefehlswerts, einen Schätzwert der Mehrphasenspannung (Vi), die in den Umsetzer (3) eingegeben wird, oder einen Schätzwert der Spannung (Vs) der Mehrphasenleistungsquelle beim Bestimmen des Gleichspannungsbefehlswerts (Vdc*) übernommen wird.

8. Umsetzersteuerverfahren nach Anspruch 7, wobei
eine Konstante, die in der linearen Berechnung verwendet wird, gemeinsam mit einem Betrieb eines Wechselrichters (4) eingestellt wird, dem die Gleichspannung (Vdc) eingegeben wird.

9. Umsetzersteuerverfahren nach einem der Ansprüche 1 bis 5, beinhaltend
einen Filterprozess für den ersten Spannungsbefehlswert (Vd*), einen Schätzwert der Mehrphasenspannung (Vi), der in den Umsetzer (3) eingegeben wird, oder einen Schätzwert der Spannung (Vs) der Mehrphasenleistungsquelle.

## Revendications

1. Procédé de commande de convertisseur destiné à commander une tension continue (Vdc) dans un convertisseur (3) dans lequel un courant multiphase (Ir, Is, It) est entré à partir d'une source de courant multiphase (1) et qui effectue une commutation pour délivrer ladite tension continue (Vdc),
une valeur d'instruction de ladite tension continue étant une valeur d'instruction de tension continue (Vdc*),
une tension multiphase entrée dans ledit convertisseur étant représentée par une paire d'une première tension (Vd) et d'une deuxième tension (Vq) dans un système de coordonnées rotatif qui tourne à une fréquence d'alimentation (ω/2π) de ladite source de courant multiphase,
ladite deuxième tension présentant une avance de phase de 90 degrés par rapport à ladite première tension,
des valeurs d'instruction pour ladite première tension et ladite deuxième tension étant une première valeur d'instruction de tension (Vd*) et une deuxième valeur d'instruction de tension (Vq*), respectivement,
ledit procédé de commande de convertisseur comprenant les étapes :
d'obtention d'un écart (ΔVdc) de ladite tension continue par rapport à ladite valeur d'instruction de tension continue (Vdc*) ;
de commande de ladite commutation sur la base de ladite première valeur d'instruction de tension et de ladite deuxième valeur d'instruction de tension ; et étant **caractérisé par**
la détermination de ladite valeur d'instruction de tension continue (Vdc*) sur la base de ladite première valeur d'instruction de tension (Vd*).

2. Procédé de commande de convertisseur selon la revendication 1, comprenant en outre les étapes :
d'obtention d'une racine carrée de la somme du carré de ladite première valeur d'instruction de tension (Vd*) et du carré de ladite deuxième valeur d'instruction de tension (Vq*) en tant que valeur d'estimation d'une tension (Vi) de ladite tension multiphase qui est entrée dans ledit convertisseur (3) ;
et
de détermination de ladite valeur d'instruction de tension continue (Vdc*) sur la base de ladite valeur d'estimation.

3. Procédé de commande de convertisseur selon la revendication 1, dans lequel
un groupe réacteur (2) dans lequel ledit courant multiphase (Ir, Is, It) circule est prévu entre ladite source de courant multiphase (1) et ledit convertisseur (3),
ledit procédé de commande de convertisseur comprenant en outre les étapes :
d'obtention d'une valeur (Vd*-r·Id) en tant que valeur d'estimation d'une tension (Vs) de ladite source de courant multiphase, ladite valeur (Vd*-r·Id) étant obtenue par soustraction, de ladite première valeur d'instruction de tension (Vd*), d'un produit (r·Id) d'un composant de résistance (r) dudit groupe réacteur qui est représenté dans ledit système de coordonnées rotatif et d'un composant (Id) présentant la même phase que celle de ladite première tension dudit courant multiphase qui est représenté dans ledit système de coordonnées rotatif ; et
de détermination de ladite valeur d'instruction de tension continue (Vdc*) sur la base de ladite valeur d'estimation.

4. Procédé de commande de convertisseur selon la revendication 1, dans lequel
un groupe réacteur (2) dans lequel ledit courant multiphase (Ir, Is, It) circule est prévu entre ladite source de courant multiphase (1) et ledit convertisseur (3),
ledit procédé de commande de convertisseur comprenant en outre les étapes :
d'obtention d'une valeur (Vi-r·Id) par soustraction d'un produit d'un composant de résistance (r) dudit groupe réacteur qui est représenté dans ledit système de coordonnées rotatif et d'un composant (Id) présentant la même phase que celle de ladite première tension dudit courant multiphase qui est représenté dans ledit système de coordonnées rotatif, d'une tension (Vi) de ladite tension multiphase qui est entrée dans ledit convertisseur, ou d'une valeur d'estimation de celle-ci ; et
de détermination de ladite valeur d'instruction de tension continue (Vdc*) sur la base de ladite valeur.

5. Procédé de commande de convertisseur selon la revendication 1, comprenant en outre les étapes :
d'obtention d'une valeur (Vs/cosΨ) en tant que valeur d'estimation de ladite tension multiphase (Vi) qui est entrée dans ledit convertisseur (3), ladite valeur (Vs/cosΨ) étant obtenue par division d'une valeur d'estimation d'une tension (Vs) de ladite source de courant multiphase par une valeur de cosinus (cosΨ) d'un arc tangente (Ψ=tan⁻¹(Vq*/Vd*)) d'une valeur résultant de ladite deuxième valeur d'instruction de tension (Vq*) divisée par ladite première valeur d'instruction de tension (Vd*) ; et
de détermination de ladite valeur d'instruction de tension continue (Vdc*) sur la base de ladite valeur d'estimation.

6. Procédé de commande de convertisseur selon l'une quelconque des revendications 1 à 5, dans lequel
une boucle d'asservissement incluant un élément intégral est retirée d'une détermination de ladite valeur d'instruction de tension continue (Vdc*).

7. Procédé de commande de convertisseur selon l'une quelconque des revendications 1 à 5, dans lequel
un calcul linéaire pour ladite première valeur d'instruction de tension, une valeur d'estimation de la tension multiphase (Vi) qui est entrée dans ledit convertisseur (3), ou une valeur d'estimation de la tension (Vs) de ladite source de courant multiphase, est adopté dans ladite détermination de ladite valeur d'instruction de tension continue (Vdc*).

8. Procédé de commande de convertisseur selon la revendication 7, dans lequel
une constante utilisée dans ledit calcul linéaire est définie en coopération avec un fonctionnement d'un onduleur (4) dans lequel la tension continue (Vdc) est entrée.

9. Procédé de commande de convertisseur selon l'une quelconque des revendications 1 à 5, incluant
un processus de filtrage pour ladite première valeur d'instruction de tension (Vd*), une valeur d'estimation de la tension multiphase (Vi) qui est entrée dans ledit convertisseur (3), ou une valeur d'estimation de la tension (Vs) de ladite source de courant multiphase.
